# EUROPEAN PATENT APPLICATION

(11) **EP 4 578 316 A1**
(43) Date of publication of application: **02.07.2025**
(21) Application number: 24220424.6
(22) Date of filing: 17.12.2024
(51) Int. Cl.: A43B 1/02, A43B 23/02, B29C 64/10, B29C 64/20, B29C 70/38, B32B 5/02, B32B 5/24, D04H 3/045

(54) **SYSTEMS AND METHODS FOR WINDING THREAD ON MOVABLE ANCHOR POINTS**

(30) Priority: 29.12.2023 US 202318400690
(71) Applicant: adidas AG, 91074 Herzogenaurach (DE)
(72) Inventor: DYCKMANS, Clemens Paul, 91074 Herzogenaurach (DE); HENNEBERY, Ian James, Portland, OR, 97217 (US); CORCORAN-TADD, Fionn, Portland, OR, 97217 (US)
(74) Representative: Bardehle Pagenberg Partnerschaft mbB Patentanwälte Rechtsanwälte

(57) **Abstract**

Methods of manufacturing an article of apparel comprising forming a thread layer by winding a continuous thread around a plurality of projections movably coupled to a support plate. The projections can be arranged around a winding field around such that the thread layer comprises a plurality of thread lines extending between two respective projections and across the winding field. After winding a thread layer on the winding field, at least some of the projections can be moved relative to the field to allow for removal the thread layer from the support plate.

## Description

### FIELD

The described embodiments generally relate to apparel and methods of making apparel. In particular, described embodiments relate to apparel comprising a layer made by winding one or more continuous threads around anchor points.

### BACKGROUND

Apparel can be manufactured from various materials using a wide range of techniques, including weaving and knitting. Individuals are often concerned with the durability, comfort, and/or performance characteristics for an article of apparel. This is true for apparel worn for athletic and non-athletic activities. Proper apparel should be durable, comfortable, and provide other beneficial characteristics for an individual. Therefore, a continuing need exists for innovations in apparel and methods of making apparel to suit individuals across a range of use cases. Particularly, there is a need for methods of making materials for apparel that have customizable characteristics yet can be efficiently manufactured in large quantities and/or sizes.

### BRIEF SUMMARY

A first embodiment (1) of the present disclosure is directed to a method of manufacturing an article of apparel. The method can comprise forming a thread layer by winding a continuous thread around a plurality of projections disposed on a support plate. The support plate can comprise a winding field around which the projections are arranged and away from which the projections are tilted. The thread layer can comprise a plurality of thread lines, with each thread line extending between two respective projections and across the winding field. The method can comprise moving at least some of the projections relative to the field. The method can comprise removing the thread layer from the support plate after moving the at least some of the projections relative to the field.

In a second embodiment (2) further to the first embodiment (1), the method can comprise bonding the thread lines to each other before removing the thread layer from the support plate.

In a third embodiment (3) further to the first embodiment (1) or second embodiment (2), the method can comprise bonding the thread lines to each other before moving the at least some of the projections relative to the field.

In a fourth embodiment (4) further to any one of embodiments (1)-(3), the projections can be pivotably connected to the support plate, and moving the at least some of the projections relative to the field comprises pivoting the projections toward the field.

In a fifth embodiment (5) further to the fourth embodiment (4), the support plate can comprise hinges that pivotably connect the projections to a base of the support plate.

In a sixth embodiment (6) further to the fourth embodiment (4) or the fifth embodiment (5), each projection can be pivotable relative to a base of the support plate.

In a seventh embodiment (7) further to any one of embodiments (4)-(6), the thread layer can be removed from the support plate in a direction of a removal axis. And when the projections are tilted away from the winding field, the projections can each extend further away from the removal axis with increasing distance from a base of the support plate.

In an eighth embodiment (8) further to the seventh embodiment (7), a respective tilt angle of each projection can be defined between the projection and the removal axis when the projections are tilted away from the field. And pivoting the projections toward the field can comprise reducing the tilt angle.

In a ninth embodiment (9) further to any one of embodiments (4)-(8), the method can comprise removing the thread layer from one of the projections after pivoting the one of the projections toward the field.

In a tenth embodiment (10) further to any one of embodiments (1)-(9), the method can comprise removing the thread layer from at least a first one of the projections before moving at least a second one of the projections.

In an eleventh embodiment (11) further to any one of embodiments (1)-(10), the article of apparel can comprise an upper for an article footwear.

In a twelfth embodiment (12) further to any one of embodiments (1)-(11), the support plate can comprise one or more sliding mechanisms that movably couple the projections to a base of the support plate.

In a thirteenth embodiment (13) further to the twelfth embodiment (12), the method can comprise forming the thread layer while the sliding mechanism is in a first position. The method can comprise bonding the continuous thread within the thread layer while the sliding mechanism remains in the first position. The method can comprise changing tension on the continuous thread after bonding the continuous thread by moving the sliding mechanism to a second position. And the method can comprise winding a second thread layer around the plurality of projections while the sliding mechanism remains in the second position.

A fourteenth embodiment (14) of the present disclosure is directed to a support plate for manufacturing an upper for an article of footwear. The support plate can comprise projections movably connected to the support plate. The projections can be arranged to define a perimeter of a field in the shape of a flat upper for an article of footwear.

In a fifteenth embodiment (15) further to the fourteenth embodiment (14), each projection can comprise a pin.

In a sixteenth embodiment (16) further to the fourteenth embodiment (14) or the fifteenth embodiment (15), the support plate can comprise hinges that pivotably couple one or more respective projections to a base of the support plate.

In a seventeenth embodiment (17) further to any one of embodiments (14)-(16), the support plate can comprise sliders that movably couple one or more respective projections to a base of the support plate.

In an eighteenth embodiment (18) further to any one of embodiments (14)-(17), the winding field can comprise two wings joined by a bridge.

A nineteenth embodiment (19) of the present disclosure is directed to a system for manufacturing an article of apparel. The system can comprise a support plate comprising projections movably connected to the support plate. The projections can be arranged to define a perimeter of a winding field on the support plate. The system can comprise a winding machine configured to wind a continuous thread around a plurality of the projections to form a thread layer comprising a plurality of thread lines, with each thread line extending between two respective projections and across the winding field.

In a twentieth embodiment (20) further to the nineteenth embodiment (19), the system can comprise an actuator configured to move the projections on the support plate relative to the winding field.

### BRIEF DESCRIPTION OF THE DRAWINGS

FIG. 1 shows a winding system according to some embodiments.
FIGS. 2A and 2B schematically represent cross sections of a winding plate according to some embodiments.
FIGS. 2C and 2D schematically represent the cross stations of the winding plate of FIGS. 2A and 2B in stages of a bonding process according to some embodiments.
FIG. 3 schematically represents a cross section of a winding plate according to some embodiments.
FIG. 4 schematically represents a cross section of a winding plate according to some embodiments.
FIG. 5 schematically represents a cross section of a winding plate according to some embodiments.
FIGS. 6A and 6B schematically represent a section of a winding plate according to some embodiments.
FIG. 6C shows the winding plate of FIGS. 6A and 6B.
FIG. 7A shows a winding plate according to some embodiments.
FIG. 7B schematically represents a cross section of a portion of the winding plate of FIG. 7A.
FIGS. 7C and 7D schematically represent cross sections of the winding plate of FIG. 7A.
FIG. 8 shows a winding plate according to some embodiments.
FIGS. 9A and 9B show thread layers according to some embodiments.
FIG. 10 shows a schematic block diagram of an exemplary computer system in which embodiments may be implemented.

### DETAILED DESCRIPTION

The present invention(s) will now be described in detail with reference to embodiments thereof as illustrated in the accompanying drawings. References to "some embodiments", "one embodiment", "an embodiment", "an exemplary embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The indefinite articles "a," "an," and "the" include plural referents unless clearly contradicted or the context clearly dictates otherwise.

The term "comprising" is an open-ended transitional phrase. A list of elements following the transitional phrase "comprising" is a non-exclusive list, such that elements in addition to those specifically recited in the list can also be present.

As used herein, unless specified otherwise, references to "first," "second," "third," "fourth," etc. are not intended to denote order, or that an earlier-numbered feature is required for a later-numbered feature. Also, unless specified otherwise, the use of "first," "second," "third," "fourth," etc. does not necessarily mean that the "first," "second," "third," "fourth," etc. features have different properties or values.

As used herein, "thread" means a material having a length that is substantially larger than its width. A "thread" can be a filament, a fiber, a yarn, a cable, a cord, a fiber tow, a tape, a ribbon, a monofilament, a braid, a string, a plied thread, and other forms of materials which can be spooled and laid down in a thread pattern as described herein.

As used herein, "apparel" can be any item that is worn or adorns an individual, including both clothing and accessories. Clothing can comprise, but is not limited to pants, shorts, leggings, socks, a shoe, a shoe upper, a jacket, a coat, a hat, a sleeve, a sweater, a shirt, a bra, a jersey, a bootie, a glove, an arm sleeve, a knee sleeve, an elbow sleeve, a wrist sleeve, an ankle sleeve. Accessories can comprise, but are not limited to a headband, a waistband, a belt, a wristband, a bracelet, a watch band, a shoulder wrap, a tape, a shin guard, a hat, a tie, a scarf, a purse, a handbag, a wallet, a knapsack, or a backpack.

An article of apparel has many purposes. Among other things, apparel can provide a unique aesthetic look, provide warming or cooling characteristics, provide support for portions of an individual's body, and provide other performance characteristics, such as air permeability, moisture wicking properties, compression properties. Each of these purposes, alone or in combination, provides for comfortable apparel suitable for use in a variety of scenarios (for example, exercise and every day activities). The features of an article of apparel (for example, the materials and components used to make apparel, and the way these materials/components are made) can be altered to produce desired characteristics, for example, durability, stiffness, weight, tackiness, texture, haptics, tackiness, and/or air permeability.

An article of apparel, or a portion thereof, can be configured to provide various degrees of durability, support, weight, breathability, etc. But the cost of manufacturing the article of apparel can also be a consideration. Apparel, or a portion thereof, that may be manufactured at a relatively low cost can be desirable for manufacturers and consumers. Apparel that can be manufactured using a relatively small amount of resources (for example, energy and labor), materials, and time reduces manufacturing costs and can also reduce the environmental impact of manufacturing.

Further, manufacturing devices and associated processes that facilitate the manufacture of articles of apparel efficiently can be desirable. Efficient manufacture can be facilitated by devices and processes that enable application of relatively large quantities of material, or multiple portions of material, simultaneously or in quick succession. Thus, devices and processes contributing to the ease with which thread layers or other wound items can be removed from the frames upon which they were wound can improve efficiency of manufacture. Reducing cut away or otherwise wasted material by enabling thread layers to be removed from the frame with little or no cutting can also contribute to efficiency.

Methods and systems according to embodiments described herein comprise a support plate with movable projections, wherein the projections serve as anchor points for winding one or more continuous threads in a thread layer or thread pattern. After a thread layer or thread pattern is wound around the projections and ready to be removed from the support plate, the projections can be moved to a position facilitating easy removal of the thread layer or pattern from the support plate. In some embodiments, projections can be moved to bring free ends of the projections closer together. In some embodiments, projections can be pivoted relative to a base of the support plate. In some embodiments, projections can be additionally or alternatively translated relative to the support plate.

As discussed herein, winding the continuous thread(s) around the anchor points comprises wrapping a continuous thread around a first anchor point, extending that continuous thread to a second anchor point, wrapping that continuous thread around the second anchor point, and so on. The number and position of the anchor points can be utilized to control characteristics of a thread layer or thread pattern, and therefore the article of apparel. Also, the number of times a continuous thread is wound from anchor point to anchor point can be utilized to control characteristics of the thread layer or thread pattern, and therefore the article of apparel.

In some embodiments, continuous thread(s) of a thread layer or thread pattern can be bonded within the thread layer or thread pattern. The bonding of continuous thread(s) can consolidate the thread layer or thread pattern and fix thread lines in a wound pattern. In some embodiments, bonding continuous thread(s) of a thread layer or thread pattern can be utilized to control characteristics of the thread pattern. In some embodiments, a continuous thread can be bonded to itself within a thread layer or thread pattern. In some embodiments, a continuous thread can be bonded to itself at one or more anchor points of a thread layer or thread pattern. In some embodiments, a continuous thread can be bonded to itself at points of overlap between different thread lines of the continuous thread (i.e., at thread line intersection points). In some embodiments, different continuous threads of a thread pattern can be bonded together. In some embodiments, different continuous threads can be bonded to each other at one or more anchor points of a thread pattern. In some embodiments, different continuous threads can be bonded to each other at points of overlap between the different continuous threads (i.e., at intersection points between the different continuous threads). The bonding of continuous thread(s) can fix the continuous thread(s) in tension as the thread(s) are wound around anchor points in tension.

In some embodiments, a plurality of different continuous threads can be wound around anchor points to form a thread pattern comprising a plurality of thread layers. In some embodiments, different continuous threads can be wound in the same configuration (i.e., around the same anchor points and along the same paths). In some embodiments, different continuous threads can be wound in different configurations (i.e., around one or more different anchor points and/or along different paths between one or more anchor points). Different continuous threads can define different wound thread layers for an article of apparel. And these different thread layers can provide different characteristics for a thread pattern, and therefore the article of apparel.

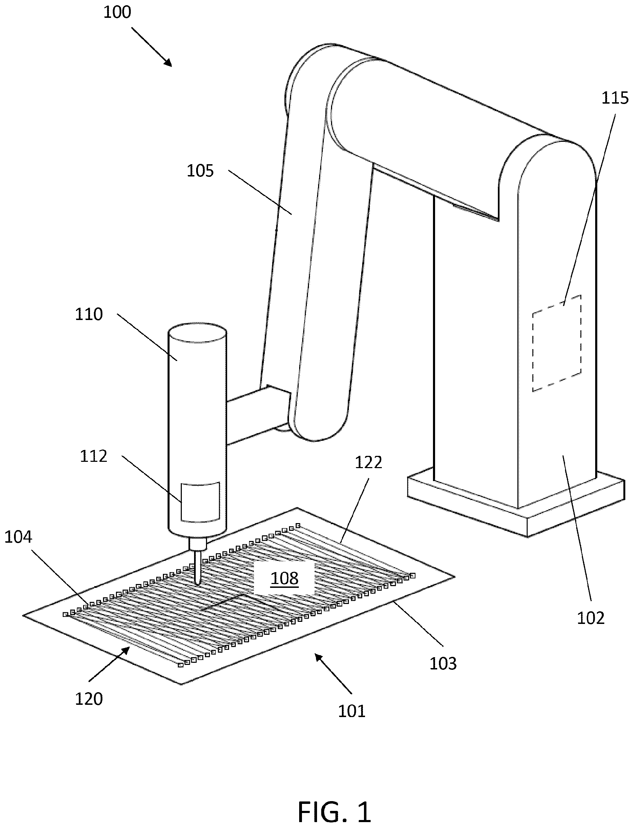

FIG. 1 illustrates a system 100 comprising a winding machine 102 and a support plate 101 according to some embodiments. Winding machine 102 comprises one or more robotic arms 105 for winding one or more thread layers 120 on support plate 101. The thread layer(s) 120 can form at least a portion of an article of apparel. In some embodiments, the article of apparel can comprise an upper for an article of footwear. Support plate 101 can be any of the support plates described herein, including support plates 201, 201, 301, 401, 501, 601, 701, and 801.

Support plate 101 comprises a plurality of projections 104. In some embodiments, each projection 104 can comprise a pin, knob, stud, or other similar structural member that can serve as an anchor point about which continuous thread(s) can be wound. Projections 104 can extend from a base 103 of support plate 101. Thread layer(s) 120 comprises thread lines 122 extending between respective projections 104 and across a winding field 108 defined by the area around which projections 104 are arranged on support plate 101. Projections 104 can thus define some or all of a perimeter of winding field 108.

Winding machine 102 is configured to create thread lines 122, and thus, thread layer(s) 120 in turn, by winding continuous thread around projections 104 on support plate 101. Thus, thread lines 122 and thread layer(s) 120 extend across winding field 108 once formed. Additionally, in some embodiments, a shape of thread layer(s) 120 can be affected by a shape of a winding field 108 of a particular support plate 101. Thus, in some embodiments, support plates 101 having differently shaped winding fields 108 can be used within system 100 to create differently shaped thread layers 120.

Arm 105 can be a motorized arm, such as a robotic arm. Movement of arm 105 can be controlled by a controller 115, such as computer system 1000, comprised by system 100 configured to control a motor or motors that move arm 105. Arm's 105 motorized movements as controlled by the controller 115 can be automated, manually controlled, or a combination thereof.

In some embodiments, controller 115 can comprise a CNC (computer numerical control) machine for controlling arm 105 and winding a thread layer or thread pattern around projections 104. In some embodiments, arm 105 can comprise the CNC machine.

In some embodiments, system 100 or arm 105 can comprise one or more thread spools 110 for threading and winding thread lines 122 of thread layer 120 around projections 104. In some embodiments, system 100 may comprise one or more thread tensioners 112 configured to apply a desired tension to thread(s) that are wound around projections 104.

Controller 115 can be configured to wind a desired thread layer or thread pattern around projections 104 using a thread model and input data. The controller 115 can comprise components of computer system 1000 discussed herein. In some embodiments, system 100 or arm 105 can comprise a winding assembly comprising a plurality of thread spools for threading and winding a plurality of different threads for thread layers or thread patterns. In some embodiments, the thread spools and thread tensioners can be the same as or similar to those described in U.S. Patent No. 11,602,196 B2, which is hereby incorporated by reference in its entirety. In some embodiments, controller 115 can control tensioner(s) 112 to wind thread(s) at desired tensions.

At least some of projections 104 are movable relative to other projections 104 of support plate 101. As discussed herein, the movable projections 104 are movable to a first position where continuous thread can be wound around projections 104 to create one or more thread layer(s) 120. The movable projections 104 are also movable to a second position where thread layer(s) 120 formed on support plate 101 can be removed from projections 104. In some embodiments, the movable projections 104 can be movable to a second position where thread layer(s) 120 formed on support plate 101 can be removed from projections 104 without cutting or otherwise breaking any thread lines 122 of the thread layer(s) 120.

Movable projections 104 can be moved to any number of positions. In each position, a thread layer 120 or thread pattern can be (i) wound around the projections 104, (ii) bonded to itself or a bonding layer, and/or (iii) removed from the projections 104. For example, in some embodiments, the movable projections 104 can be movable to third and/or fourth positions. In some embodiments, the third and/or fourth positions can be positions during which thread lines within a thread layer 120 or thread pattern are bonded as described herein.

Removing thread layers 120 from support plate 101 without cutting or breaking thread lines 122 of thread layers 120 can be expedient and can reduce wasted material. Additionally, thread layers 120 removed from support plate 101 without cutting or otherwise breaking thread lines 122 can, in some embodiments, comprise loops at the perimeters of the thread layers 120 where movable projections 104 extended through the thread layers 120 before thread layers 120 were removed from support plate 101. The loops can be usable for purposes within the finally assembled garment or article of which thread layers 120 are intended to form a part, which can further contribute to efficient manufacture of the garment or article. In some embodiments, the loops can be usable for string lasting, wherein a cord is passed through the loops around the perimeter edge, and then pulled to tighten the thread layers around a last form an intended three dimensional shape, such as for an upper during the shoe assembly process. In further embodiments, the loops can be usable as loops for receiving laces for tightening the garment or article, such as for receiving shoelaces where the garment or article is a shoe. In further embodiments, the loops can be used to connect other materials to the thread layers 120, such as by sewing other materials to the thread layers 120 by passing thread through the loops and the other materials.

As discussed herein, system 100 can perform a method of manufacturing an article of apparel comprising forming a thread layer 120 by winding a continuous thread around a plurality of projections 104 disposed on a support plate 101 comprising a winding field 108 around which projections 104 are arranged. In a first position, at least some of the projections 104 can be positioned relative to winding field 108 to inhibit removal of thread layer 120 from support plate 101. By inhibiting removal in the first position, the projections 104 can facilitate winding of thread lines 122 extending between two respective projections 104 and across the winding field 108. The method can further comprise moving at least some of the projections 104 relative to the field 108 and into a second position. In the second position, the projections 104 can be positioned relative to winding field 108 to allow removal of thread layer 120 from support plate 101. After moving the at least some of the projections 104 relative to the field 108 and into the second position, the method can further comprise removing thread layer 120 from support plate 101.

Projections 104 can be movable from the first position to the second position in any manner conducive to releasing thread layer(s) 120 from support plate 101. Projections 104 can also be movable from the second position to the first position in the same manner that they moveable from the first position to the second position. In some embodiments, projections 104 can pivot relative to base 103. In some embodiments, projections 104 can pivot relative to other projections 104. In some embodiments, projections can translate relative to base 103. In some embodiments, projections 104 can translate relative to other projections 104. In some embodiments, moving projections 104 relative to winding field 108 can comprise pivoting projections 104 toward or away from winding field 108. In some embodiments, moving projections 104 relative to winding field 108 can comprise translating projections 104 toward or away from winding field 108.

In some embodiments, the method can comprise bonding the threads within thread layer 120 before removing thread layer 120 from support plate 101. The method can thus comprise bonding the threads within the thread layer or thread layers that make up a thread pattern. As described herein, bonding the threads within thread layer 120 can comprising bonding thread lines of thread layer 120 to each other before removing thread layer 120 from support plate 101. In some embodiments, the thread lines can be bonded to each other before moving the at least some of the projections 104 relative to winding field 108 as described herein. For example, the thread lines can be bonded to each other before moving the at least some of the projections 104 from a first position to a second position as described herein. In some embodiments, the thread lines can be bonded to each other after moving the at least some of the projections 104 relative to winding field 108 as described herein. For example, the thread lines can be bonded to each other after moving the at least some of the projections 104 from a first position to a second position as described herein. In such embodiments, at least some of the projections 104 can be moved to a third position before removing thread layer 120 from support plate 101. Bonding threads can comprise any processes for joining or interlinking threads as appropriate for an intended application. Accordingly, bonding threads according to some embodiments can comprise, for example, baking threads, heat fusing threads, heat pressing threads, applying a bonding agent to threads, or any combination of the foregoing.

In any of the embodiments herein, the movable projections 104 can be replaceable. In such embodiments, movable projections 104 can be removable from and re-attachable to a support plate 101. This may reduce overall investment by not needing to remake the projections for each plate design. Instead, a common inventory of projections can be used across a range of base plate designs with differently shaped winding fields. In some embodiments, the replaceable movable projections 104 can hingedly coupled to support plate 101, snap-fit to support plate 101, or slidably coupled to support plate 101. Once attached, the replaceable movable projections 104 are moveable on support plate 101 as described herein.

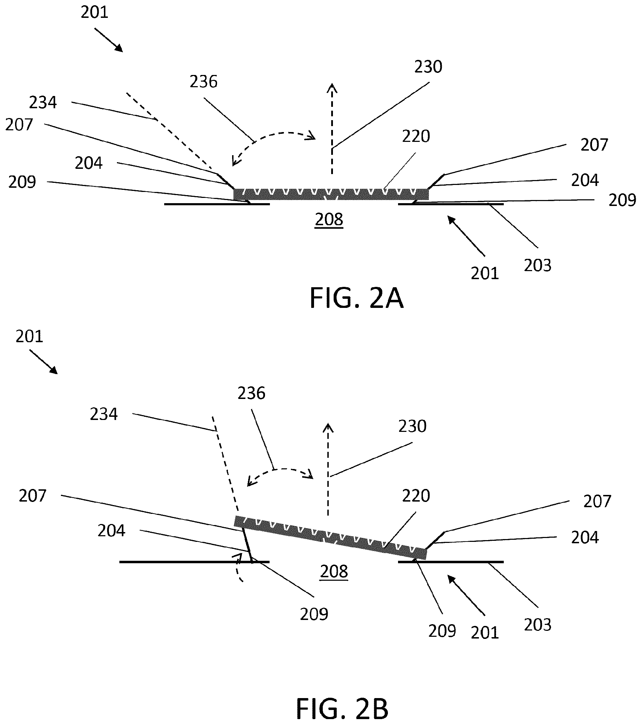

FIGS. 2A and 2B illustrate a cross section of a support plate 201 with a thread layer 220 formed thereon according to some embodiments. Support plate 201 and thread layer 220 can be alike in all respects to support plate 101 and thread layer 120 described above.

As shown in FIG. 2A, projections 204 can be tilted away from winding field 208 in a first position to inhibit removal of thread layer 220 from support plate 201. Projections 204 being tilted away from winding field 208 can also facilitate winding continuous thread about projections 204 during creation of thread layer 220. As further shown in FIG. 2A, a distance between two projections 204 can increase with increasing distance from base 203. Free ends 207 of projections 204 can therefore be farther apart from one another than bases 209 of projections 204 adjoining base 103. With projections 204 tilted away from winding field 208, tension on thread lines of thread layer 220 can prevent thread layer 220 from traveling away from base 203 when projections 204 are positioned as shown in FIG. 2A.

Movable projections 204 can be moved to a second position to release completed thread layer 220 from support plate 201, as illustrated in for example FIG. 2B. In some embodiments, moving projections 204 to release thread layer 220 can comprise moving projections 204 to bring free ends 207 of at least some projections 204 closer together to enable thread layer 220 to travel along projections 204 past the free ends 207 of projections 204. In some embodiments, moving projections 204 to bring some free ends 207 of at least some projections 204 closer together can comprise pivoting projections 204 to reduce a tilt angle 236 as shown in FIGS. 2A and 2B.

In some embodiments, the tilt angle 236 in the first position can range from 30 degrees to 45 degrees. In some embodiments, the tilt angle 236 in the first position can range from 20 degrees to 55 degrees. In some embodiments, the tilt angle 236 in the first position can range from 40 degrees to 50 degrees. In some embodiments, the tilt angle 236 in the second position can range from 0 degrees to 15 degrees. In some embodiments, the tilt angle 236 in the second position can range from 10 degrees to 20 degrees. In some embodiments, tilt angle 236 can be changed by at least 30 degrees when moving projections 204 from the first position to the second position. In some embodiments, tilt angle 236 can be changed by at least 15 degrees when moving projections 204 from the first position to the second position. In some embodiments, tilt angle 236 can be changed by between 20 degrees and 40 degrees when moving projections 204 from the first position to the second position.

In the first position of projections 204 shown in FIG. 2A, thread layer 220 is prevented from being removed from support plate 201 in a direction parallel to removal axis 230 because projections 204 on which thread layer 220 is formed are tilted away from one another and winding field 208. Because projections 204 are tilted away from winding field 208, projections 204 each extend further away from removal axis 230 with increasing distance from base 203 of support plate 201.

Extension 234 illustrated in FIGS. 2A and 2B represents a direction along which projection 204 extends. Thus, tilt angle 236 illustrated between extension 234 and removal axis 230 shows that tilt angle 236 can be defined between projection 204 and removal axis 230. Because projection 204 of the illustrated embodiment is pivotably connected to base 203, projection 204 can be pivoted relative to base 203 to change tilt angle 236 as shown in the transition from FIG. 2A to FIG. 2B. In particular, projection 204 can be pivoted to reduce tilt angle 236 to enable release of thread layer 220 as shown in FIG. 2B. Reducing tile angle 236 can reduce a distance between free ends 207 of projections 204, thereby enabling thread layer 220 to be removed from projections 204.

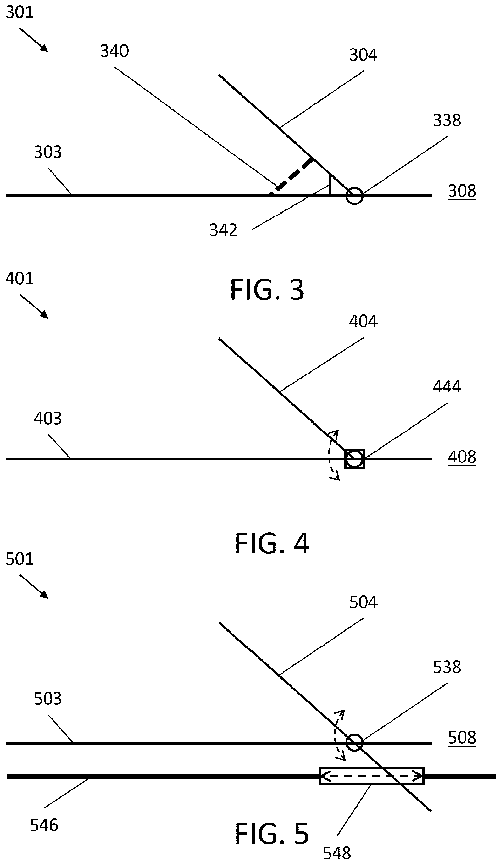

In some embodiments, methods described herein can comprise removing thread layer 220 from support plate 201 after pivoting at least one projection 204 to reduce projection's 204 tilt angle 236. In such embodiments, the method can comprise removing thread layer 220 from support plate 201 after pivoting at least one projection 204 toward winding field 208. In some embodiments, the method can comprise removing thread layer 220 from at least one projection 204 before moving at least one other projection 204, as shown in FIG. 2B. In some embodiments, system 100 can comprise any of the mechanisms discussed with reference to FIGS. 3-5 and configured to tilt projections 204, or a group of projections 204, toward and away from winding field 208.

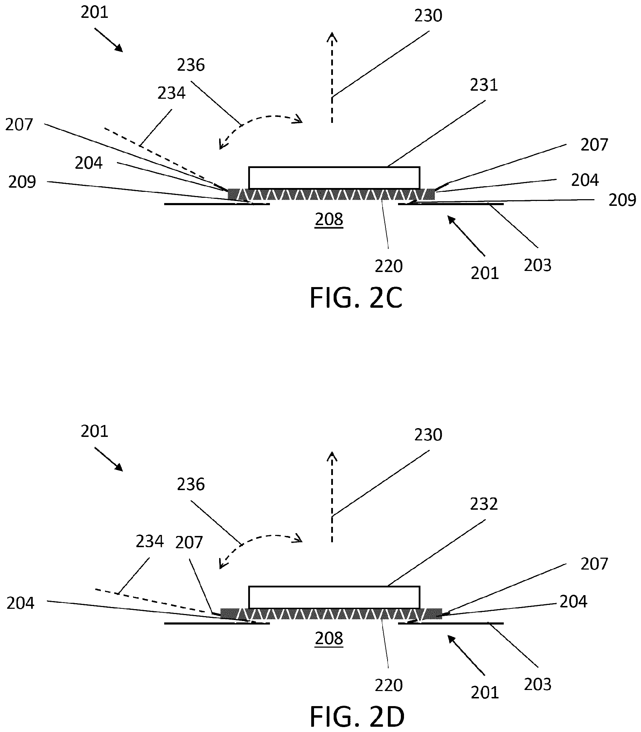

In some embodiments, the method can comprise winding one or more threads about projections 204 while projections are in a first position, then bonding the thread(s) while free ends 207 are further apart from one another than while projections 204 are in the first position, then moving free ends 207 together to release thread layer 220 from projections 204 after bonding is completed. For example, the method can comprise winding a continuous thread about projections 204 to form a thread layer 220 while projections 204 are in a first position. The method can comprise pivoting projections 204 to a second, outer position wherein free ends 207 are farther apart from one another than while projections 204 are in the first position after the thread layer 220 is formed. The method can comprise bonding the threads within the thread layer 220 after pivoting projections 204 to the outer position and while projections 204 remain in the outer position. Bonding in some embodiments can comprise application of heat, such as applying a heat press 231 to thread layer 220 as shown in FIG. 2C. The method can comprise, after bonding threads within thread layer 220, pivoting projections 204 to a third, release position at which free ends 207 are nearer to one another than when projections 204 are in the first position and/or the second position. The method can comprise removing thread layer 220 from projections 204 after pivoting projections 204 to the release position. Thus, in some embodiments, a stage depicted in FIG. 2C can occur between the stage depicted in FIG. 2A and the stage depicted in FIG. 2B.

In some embodiments, the method can comprise multiple bonding processes. In some such embodiments, the method can comprise, after completing a first bonding process while projections 204 are in the outer position and before pivoting projections 204 to the release position, pivoting projections 204 to a fourth, further outer position at which free ends 207 are farther apart or closer together from one another than while projections 204 are in the outer position. The method can comprise applying a second bonding process after pivoting projections 204 to the further outer position and while projections 204 remain in the further outer position. In some embodiments, the second bonding process can be different from the first bonding process. For example, the first bonding process can comprise application of a heat press 231 configured to melt and compress the threads within thread layer 220 as shown in FIG. 2C, and the second bonding process can comprise application of a cold press 232 to solidify and further compress the threads within thread layer 220 as shown in FIG. 2D. Thus, in some embodiments, a method can comprise the stage depicted in stage 2A, then the stage depicted in FIG. 2C, then the stage depicted in FIG. 2D, then the stage depicted in FIG. 2B.

Methods comprising one or more bonding steps between winding a thread layer or thread pattern and removing the thread layer or thread pattern from the support plate as described above can be conducted with any support plate embodiment disclosed herein. Thus, for each embodiment of support plate described herein, a method can comprise winding a thread layer on movable projections while the projections are in a first position, moving the projections to spread the free ends apart in a second position, performing one or more bonding steps, moving the projections again to a third position such that the free ends closer together than in the first position and/or the second position to release the bonded thread layer from the support plate. For example, for each embodiment of support plate described herein, a method can comprise winding a thread layer on movable projections while the projections are in a first position, moving the projections to spread the free ends apart, applying a heat press, moving the projections to spread the free ends even farther apart, applying a cold press, then moving the projections again to bring the free ends closer together than in the first position and/or the second position to release the bonded thread layer from the support plate.

In some embodiments, projections 204 can be spring biased relative to support plate 201 to be stable in two or more different positions. In further embodiments, projections 204 can be connected to support plate 201 by an over center linkage to be stable in two different positions.

FIG. 3 illustrates a portion of a support plate 301 according to some embodiments. Support plate 301 can be alike in all respects to any of the support plates 101, 201 described above. Thus, support plate 301 comprises a base 303 and projections 304 extending from base 303 adjacent a winding field 308 defined by projections 304.

One or more projections 304 are pivotably coupled to base 303 by a hinge 338. In some embodiments, support plate 301 can comprise features configured to resist unintended release of thread layers from projections 304. For example, in some embodiments, support plate 301 can comprise a biasing element 340 configured to bias projection(s) 304 toward a position suitable for creation of a thread layer on projections 304. Biasing element 340 can comprise, for example, a spring.

In some embodiments, biasing element 340 can comprise a tension element configured to increase in tension as a tilt angle of projection(s) 304 to which biasing element 340 is connected decreases. In such embodiments, biasing element 340 can resist movement of projection(s) 304 to a position wherein a thread layer can be easily removed from projections 304. In some embodiments, support plate 301 can comprise a stop 342 configured to prevent biasing element 340 from moving projection(s) 304 beyond a position suitable for winding thread on projection 304.

FIG. 4 illustrates a portion of a support plate 401 according to some embodiments. Support plate 401 can be alike in all respects to any of the support plates 101, 201, 301 described above. Thus, support plate 401 comprises a base 403 and projections 404 extending from base 403 adjacent a winding field 408. One or more projections 404 are pivotably connected to base 403. Support plate 401 comprises an actuator 444 configured to pivot one or more projections 404 relative to base 403. In some embodiments, actuator 444 can comprise a motorized actuator. For example, in some embodiments, actuator 444 can comprise a servomotor. In some embodiments, actuator 444 can be controlled by controller 115 of a system 100. In some embodiments, actuator 444 can be controlled by a controller on support plate 401. In such embodiments, the controller can comprise a switch or servomotor.

In some embodiments, support plate 401 can comprise a single actuator 444 configured to pivot multiple projections 404. In some embodiments, support plate 401 can comprise a respective actuator 444 for each movable projection 404. Pivoting projection 404 can therefore comprise operating actuator(s) 444 to pivot one or more projections 404 relative to winding field 408.

FIG. 5 illustrates a portion of a support plate 501 according to some embodiments. Support plate 501 can be alike in all respects to any of the support plates 101, 201, 301, 401 described above. Thus, support plate 501 comprises a base 503 and projections 504 extending from base 503 adjacent a winding field 508. One or more projections 504 are pivotably connected to base 503 by a hinge 538.

Support plate 501 can be used on a platform 546. In such embodiments, system 100 can comprise platform 546. Platform 546 can comprise an actuator 548 operatively connected to one or more projections 504. Actuator 548 can be used to move a part of projection 504 relative to hinge 538. Because hinge 538 pivotably connects projection 504 to base 503, using actuator 548 to move a part of projection 504 relative to hinge 538 causes hinge 538 to pivot relative to base 503 and winding field 508. Thus, in some embodiments, system 100 can comprise an actuator 548 that is configured to cause one or more projections 504 of a support plate 501 to pivot relative to a base 503 of support plate 501 when support plate 501 is positioned within system 100. In some embodiments, actuators 548 within system 100 can be configured to pivot projections 504 of interchangeable support plates 501 usable in the system 100.

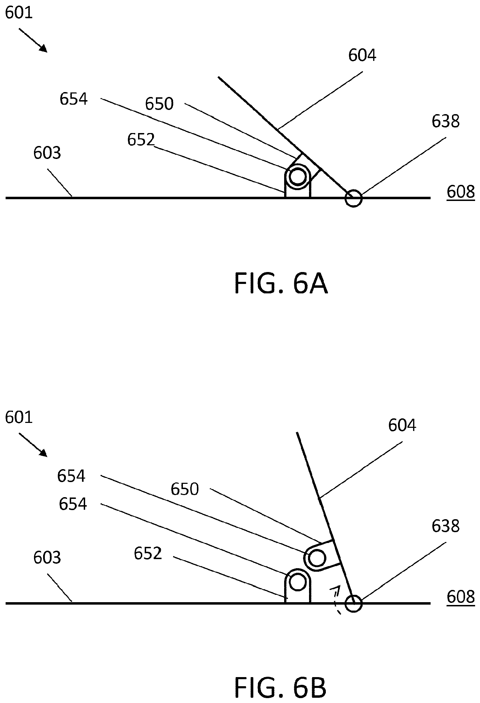

FIGS. 6A and 6B illustrate a portion of a support plate 601 according to some embodiments. Support plate 601 can be alike in all respects to any of the support plates 101, 201, 301, 401, 501 described above. Thus, support plate 601 comprises a base 603 and projections 604 extending from base 603 adjacent a winding field 608. One or more projections 604 of support plate 601 are pivotably connected to base 603 by a hinge 638.

Support plate 601 can comprise a locking mechanism configured to be operable to selectively lock and unlock projections 604. In some embodiments, projections 604 can pivot relative to base 603 when unlocked and cannot pivot relative to base 603 when locked.

In some embodiments, a locking mechanism of support plates 601 can comprise tabs 650, 652 and a pin 656. In such embodiments, support plate 601 comprises a projection tab 650 connected to one or more projections 604 and a base tab 652 connected to base 603. Projection tab 650 and base tab 652 can each comprise a respective eye 654. As shown in FIG. 6A, in a first position, projection(s) 604 can be pivoted relative to base 603 to a position wherein eyes 654 are coaxially aligned. And, in a second position, as shown in FIG. 6B, projection(s) 604 can be pivoted relative to base 603 to a position wherein eyes 654 are not aligned. A pin 656 can be placed through eyes 654 when projection(s) 604 are in the first position lock the projection(s) 604.

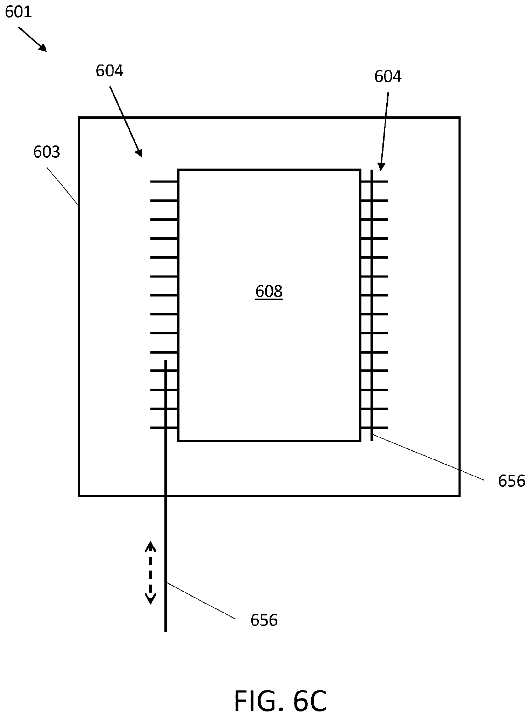

In some embodiments, as shown for example in FIG. 6C, a single pin 656 can be configured to extend across multiple projections 604. In such embodiments, by sliding a pin 656 relative to support plate 601, a user can quickly lock or unlock several projections 604.

Any support plate described herein, including support plates 101, 201, 201, 301, 401, 501, 701, and 801 can comprise one or more locking mechanisms as described in connection with FIGS. 6A-6C.

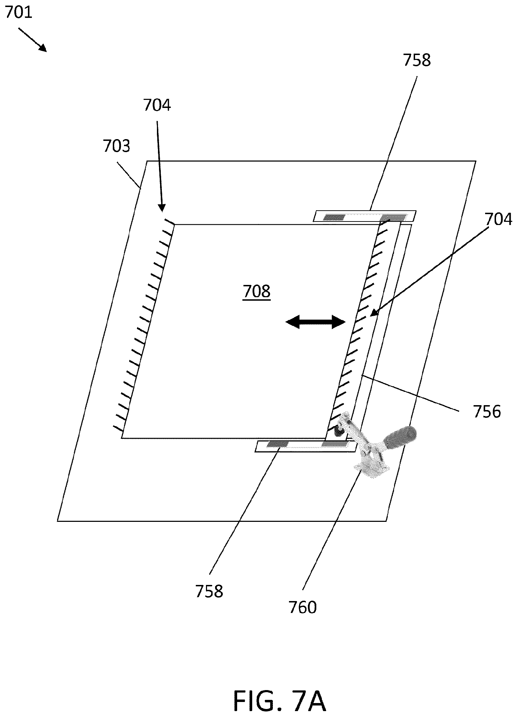

FIG. 7A illustrates a support plate 701 according to some embodiments. Support plate 701 can be alike in all respects to any of the support plates 101, 201, 301, 401, 501, 601 described above. Thus, support plate 701 comprises a base 703 and a plurality of projections 704 extending from base 703 and arranged around adjacent a winding field 708.

Support plate 701 comprises a sliding mechanism that movably couples projections 704 to base 703 and is configured to move projections 704 from a first position to a second position. In some embodiments, the sliding mechanism can comprise a panel 756 slidable on one or more tracks 758. In such embodiments, the one or more tracks 758 are positioned on base 703, and panel 756 is movable relative to base 703 along the one or more tracks 758. In some embodiments, support plate 701 can comprise a plurality of sliding mechanisms that each movably couple a different subset of projections 704 to base 703.

In some embodiments, support plate 701 can comprise a fixation device for fixing a position of the sliding mechanism. In some embodiments, the fixation device can comprise a clamp 760. In some embodiments, the clamp 760 can be a manually operated clamp mounted to base 703. In some embodiments, the clamp 760 can be an automated clap mounted to base 703. In such embodiments, clamp 760 can be controlled by controller 115 of system 100.

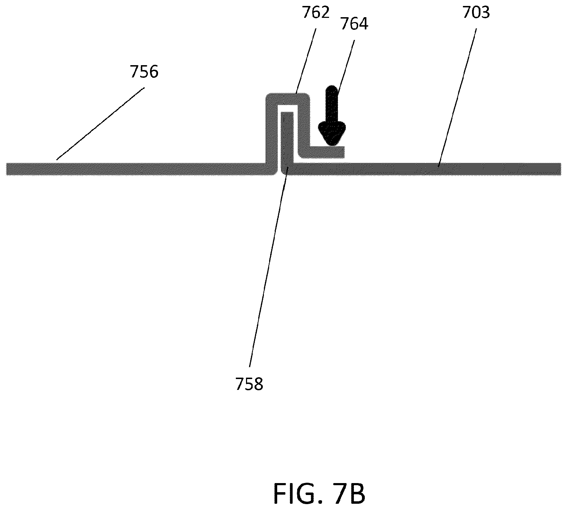

In some embodiments, as shown in FIG. 7B, panel 756 can comprise a flange 762 configured to couple panel 756 to track 758. In such embodiments, clamp 760 can be configured to apply a clamping force 764 against flange 762 to frictionally prevent flange 762 from sliding along track 758, thereby reversibly fixing a position of panel 756 relative to base 703.

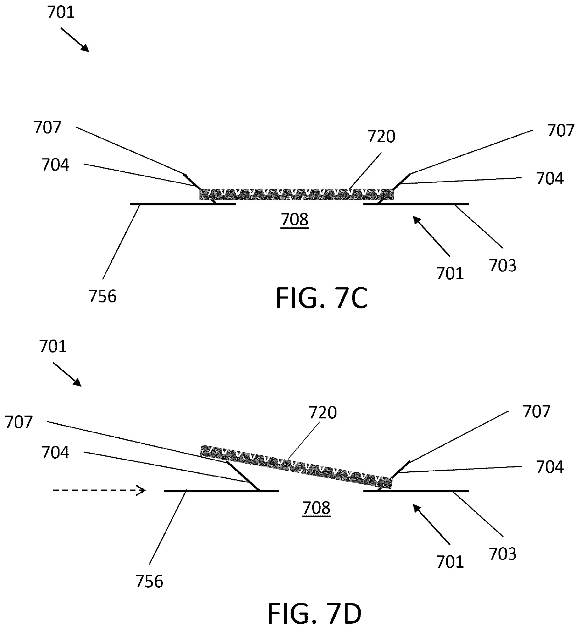

FIGS. 7C and 7D illustrate the operation of support plate 701 according to some embodiments. In operation, panel 756 can be slid toward a portion of base 703 on an opposite side of winding field 708 from panel 756 to reduce a distance between projections 704 on panel 756 and projections 704 on the opposite side of winding field 708 from panel 756. Thus, in some embodiments, moving projections 704 to bring some free ends 707 of at least some projections 704 closer together can comprise translating projections 704 relative to base 703 and winding field 708 to reduce a distance between some projections 704 as shown in FIGS. 7C and 7D.

In some embodiments, methods described herein can comprise removing thread layer 720 from support plate 701 after translating at least one projection 704 to reduce a distance between the at least one projection 704 and another projection 704. Further, in such embodiments, the method can comprise removing thread layer 720 from support plate 701 after translating at least one projection 704 relative to winding field 708.

In some embodiments, a method comprising support plate 701 can comprise winding part of a thread layer or thread pattern on support plate 701 while the sliding mechanism is in a first position, moving the sliding mechanism to a second, different position, then winding another part of a thread layer or thread pattern on support plate 701 while the sliding mechanism is in the second position. For example, in some embodiments, the method can comprise winding some thread lines on support plate 701 with the sliding mechanism in the first position, moving the sliding mechanism to a second position to increase tension on the thread lines, and then winding more thread lines on support plate 701 with the sliding mechanism in the second position. As another example, in some embodiments, the method can comprise winding some thread lines on support plate 701 with the sliding mechanism in the first position, moving the sliding mechanism to decrease tension on the thread lines, and then winding more thread lines on support plate 701 with the sliding mechanism in the second position.

In some embodiments, the thread lines within the thread layer or thread pattern can be consolidated after winding in the first position and before moving the sliding mechanism to the second position. For example, the method can comprise winding some thread lines on support plate 701 with the sliding mechanism in the first position, bonding the thread lines while the sliding mechanism remains in the first position, and then moving the sliding mechanism to a second position to increase tension on the bonded thread lines before winding more thread lines. In some embodiments, the method can comprise winding some thread lines on support plate 701 with the sliding mechanism in the first position, bonding the thread lines while the sliding mechanism remains in the first position, and then moving the sliding mechanism to a second position to decrease tension on the bonded thread lines before winding more thread lines. In any case, after winding and/or bonding thread lines with the sliding mechanism in the first position and the second position, the sliding mechanism can be moved to a third position to allow removal of a completed thread layer or thread pattern.

In such embodiments, support plate 701 can be used to create thread layers or thread patterns comprising different sets of thread lines wound at different degrees of resting tension. In such embodiments, the different degrees of resting tension can introduce uneven, buckled structures to the thread layers or thread patterns.

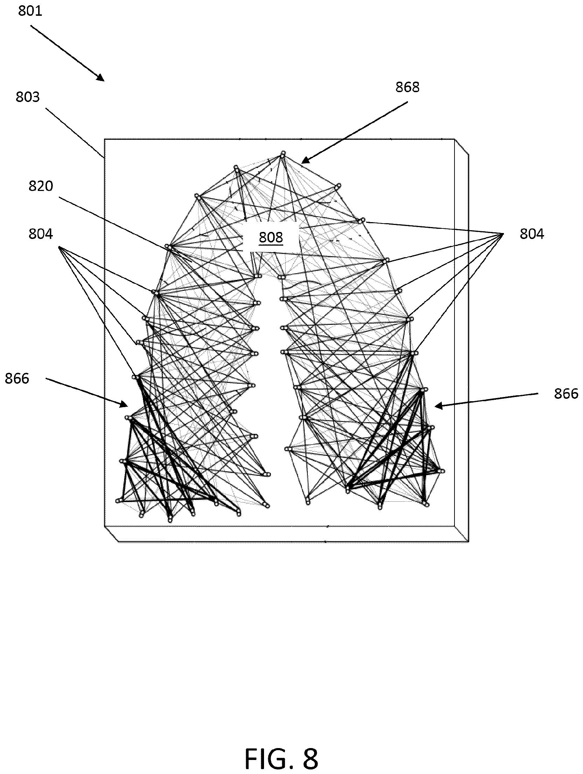

FIG. 8 illustrates a support plate 801 according to some embodiments. Support plate 801 can be alike to any of the support plates 101, 201, 301, 401, 501, 601, 701 discussed above. Thus, support plate 801 comprises a base 803 and a plurality of projections 804 extending from base 803 and arranged around adjacent a winding field 808. At least some projections 804 are movable projections 804. Projections 804 can be movably connected to support plate 801 via any of the pivoting or sliding mechanisms described herein.

Winding field 808 is in the shape of a flat upper for an article of footwear. Projections 804 are therefore arranged to define a perimeter of winding field 808 in the shape of a flat upper for an article of footwear can comprising two wings 866 joined by a bridge 868.

Winding field 808 of the illustrated embodiment comprises a relatively large perimeter relative to its area. Thus, cutting thread layer 820 out of support plate 801 would require a relatively long cutting path, and would leave behind a relatively large amount of wasted material. Using movable projections 804 according to any of the embodiments described herein to enable removal of thread layer 820 from support plate 801 with little or no cutting can therefore expedite removal of thread layer 820 from support plate 801 and reduce wasted material in some embodiments.

Thread patterns as described herein can each comprise multiple thread layers, such as thread layers 120, 220, 720, 820, described above and the thread layers 900 and 920 described in further detail below. The winding steps described above with regard to system 100 can be implemented according to details described below with regard to the thread layers 900 and 920. Thread layers as described herein (for example, thread layers 900 and 920) can each comprise a thread border 950 defined by the space in which thread lines of the thread layer are located. The thread border 950 for a thread layer is the space in which thread lines of the thread layer are located after the thread layer is removed (for example, cut) from anchor points used to wind the thread layer. Each anchor point can be a projection, such as projection 104, within a projection set disposed around a winding field. A plurality of thread lines within a thread pattern can comprise a first end located at a first side of the thread border 950 and a second end located at a second side of the thread border 950. For example, thread lines 904 of thread layer 900 can comprise a first end 910 located at a first side of thread border 950 and a second end 912 located at a second side of thread border 950.

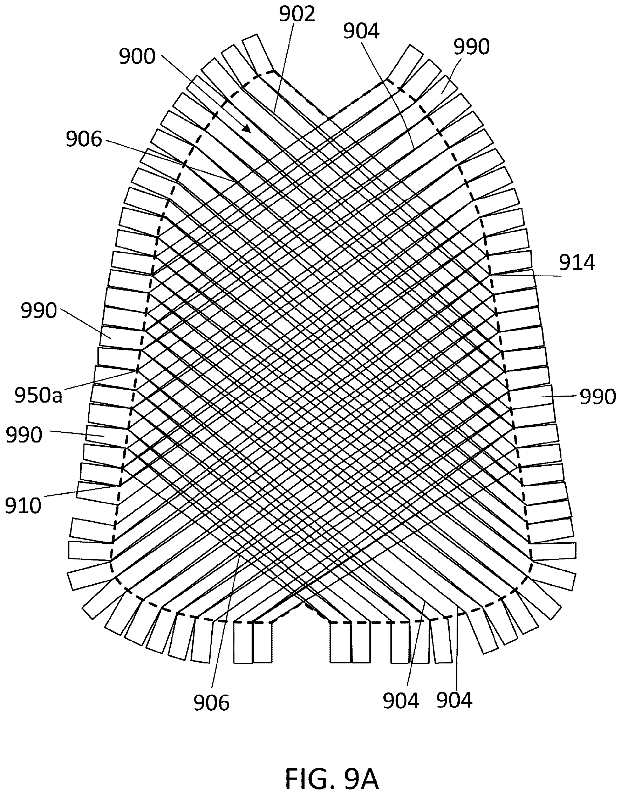

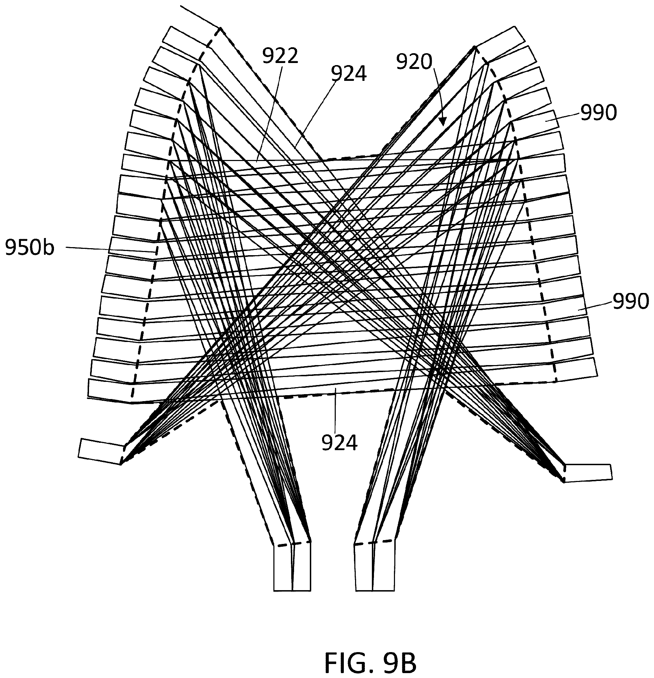

FIGS. 9A and 9B illustrate thread borders 950a-b for thread layers 900 and 920. For a thread pattern comprising a plurality of thread layers, the thread pattern can comprise a thread pattern border 950 defined by the space occupied by the combination of the individual thread layers.

As used herein, sides of a perimeter edge or a border refer to top, bottom, right, and left sides of a shape defined by the edge or border. The top, bottom, right, and left sides of the shape are located to the top, bottom, right, and left of a geometrical center of the shape. So, a perimeter edge or border will have a top side defined by the portion of the edge located above the geometrical center, a bottom side defined by the portion of the edge located below the geometrical center, a right side defined by the portion of the edge or border located to the right of the geometrical center, and a left side defined by the portion of the edge or border located to the left of the geometrical center. The top and bottom sides do not overlap. Similarly, the left and right sides do not overlap. The top and left sides overlap at the portion of the edge or border located to the top-left of the geometrical center. The top and right sides overlap at the portion of the edge or border located to the top-right of the geometrical center. The bottom and left sides overlap at the portion of the edge or border located to the bottom-left of the geometrical center. The bottom and right sides overlap at the portion of the edge or border located to the bottom-right of the geometrical center. For purposes of determining the shape defined by the perimeter edge or border, the material having the edge or border is laid in a flat configuration with no portion of the material overlapping itself.

As used herein, a first side of a perimeter edge or border can be the top, bottom, right, or left side of the edge or border and a second side of the perimeter edge can be the top, bottom, right, or left side of the edge or border, provided that the first and second sides are not the same side. Similarly, a third side of a perimeter edge or border can be the top, bottom, right, or left side of the edge or border and a fourth side of the edge or border can be the top, bottom, right, or left side of the edge or border, provided that the third and fourth sides are not the same, and are not the same as the first or second sides.

In some embodiments, one or more thread layers (for example, thread layers 900 and 920) can comprise a thread defining (i) a plurality of thread lines (for example, thread lines 904 and 924) each extending from a first side of a thread border to a second side of the thread border and crossing over each other at points of overlap between two or more of the thread lines, and (ii) a plurality of thread lines each extending from a third side of the thread border to a fourth side of the thread border and crossing over each other at points of overlap between two or more of the thread lines. The thread lines extending from the first side to the second side can extend continuously from the first side to the second side, and the thread lines extending from the third side to the fourth side can extend continuously from the third side to the fourth side.

Thread layer 900 comprises a continuous thread 902 wound around anchor points 990. Thread layer 920 comprises a continuous thread 922 wound around anchor points 990. In some embodiments, anchor points 990 can be different sets of anchor points around which different thread layers are wound. In some embodiments, a plurality of thread layers can wound around the same set of anchor points 990. In such embodiments, separate thread layers can be wound over each other, with one thread layer disposed over one or more other thread layers.

As used herein, "anchor point" means a location to which a thread or group of thread lines is fixedly attached. Each anchor point can be provided by a projection 104 described above. A thread or thread line can be wrapped, wound, bonded, or otherwise attached at an anchor point. In some embodiments, an anchor point can be a location on an article of apparel. For example, an anchor point can be a hole or opening left behind by a structure (for example, pin, projection, or nub) used to wind continuous thread(s) of a thread layer and/or thread pattern. In some embodiments, a thread layer or thread pattern for an article of apparel may not comprise any anchor point locations because all the anchor point locations present during winding of the thread layer or thread pattern have been removed (for example, cut off). An anchor point can be a structure (for example, pin, projection, or nub) used to wind continuous thread(s) of a thread layer and/or thread pattern. And the anchor point structure may or may not form a portion of a thread layer or thread pattern for an article of apparel.

A continuous thread wrapped or wound around an anchor point need not be wrapped or wound completely (i.e., 360 degrees) around the anchor point. A continuous thread wrapped or wound around an anchor point can be wrapped or wound around only a portion of the anchor point. For example, a continuous thread wrapped or wound around an anchor point can be wrapped or wound around 25% (90 degrees) of an anchor point's perimeter, 50% (180 degrees) of an anchor point's perimeter, 75% (270 degrees) of an anchor point's perimeter, or 100% (360 degrees) of an anchor point's perimeter. In some embodiments, a continuous thread can be wrapped or wound around an anchor point's perimeter more than once before being threaded to the next anchor point. For example, a continuous thread can be wrapped or wound around an anchor point's perimeter one and a half times (540 degrees) or twice (720 degrees) before being threaded to the next anchor point.

Continuous thread 902 can be wrapped around a plurality of anchor points 990 and comprises a plurality of thread lines 904. Each thread line 904 extends between two respective anchor points 990.

Continuous thread 902 can be wrapped around a plurality of anchor points 990 in tension such that individual thread lines 904 are in tension when wrapped around anchor points 990. In some embodiments, the tension at which thread lines 904 are wound can range from 0 centinewtons (cN) to 25 cN, including subranges. For example, in some embodiments, the tension at which thread lines 904 are wound can range from 0.01 cN to 25 cN, from 0.1 cN to 25 cN, from 1 cN to 25 cN, from 5 cN to 25 cN, from 10 cN to 25 cN, or from 15 cN to 25 cN. In some embodiments, the tension at which thread lines 904 are wound can range from 2 cN to 10 cN. In some embodiments, the tension at which thread lines 904 are wound can range from 2 cN to 6 cN.

The number of thread lines 904 for thread layer 900 fixed at an anchor point 990 is defined by the "thread line communication number" of an anchor point 990. As used herein, "thread line communication number" means the number of thread lines extending from an anchor point to different anchor points. Two thread lines extending between the same two anchor points (i.e., overlaying thread lines) only counts as "1" for purposes of calculating a thread line communication number for the anchor points. For example, a thread line communication number of five means that an anchor point has five thread lines extending from it with each of the five thread lines leading to another, different anchor point. As another example, a thread line communication number of six means that an anchor point has six thread lines extending from it with each of the six thread lines leading to another, different anchor point.

Similarly, the number of thread lines fixed at an anchor point 990 for a thread pattern comprising a plurality of thread layers is defined by the "thread line communication number" of an anchor point 990 for the thread pattern. For a thread pattern, the "thread line communication number" of an anchor point 990 is the total number of thread lines, for the plurality of layers, extending from an anchor point to different anchor points.

Anchor points 990 can have a thread line communication number of "X" or more for a thread layer or a thread pattern. In some embodiments, two or more respective anchor points 990 can have a thread line communication number of "X" or more. In some embodiments, all the anchor points 990 for a thread layer or a thread pattern can have a thread line communication number of "X" or more. "X" can be, for example, 2, 3, 4, 5, 6, 7, 8, 9, 10, 15, 20, 25, 30, 35, 40, 45, or 50, within a range having any two of these values as end points. For example, in some embodiments "X" can be in a range of 2 to 50, 3 to 50, 4 to 50, 5 to 50, 6 to 50, 7 to 50, 8 to 50, 9 to 50, 10 to 50, 15 to 50, 20 to 50, 25 to 50, 30 to 50, 35 to 50, 40 to 50, or 45 to 50. In some embodiments, "X" can be greater than 50. In some embodiments, "X" can range from 2 to 100, 10 to 100, or 20 to 100. In some embodiments, "X" can range from 2 to 100, 10 to 100, 20 to 100, 10 to 200, 20 to 200, 50 to 200, 10 to 300, 20 to 300, or 50 to 300.

A thread layer, for example thread layer 900, can comprise any suitable number of thread lines. In some embodiments, a thread layer can comprise 10 or more thread lines. In some embodiments, a thread layer can comprise 20 or more thread lines. In some embodiments, a thread layer can comprise 50 or more thread lines. In some embodiments, a thread layer can comprise 100 or more thread lines. In some embodiments, a thread layer can comprise 200 or more thread lines. In some embodiments, a thread layer can comprise 300 or more thread lines. In some embodiments, a thread layer can comprise 500 or more thread lines. In some embodiments, a thread layer can comprise a number of thread lines in a range of 10 to 300. For example, a thread layer can comprise 10 to 300, 50 to 300, 100 to 300, or 150 to 300 thread lines. In some embodiments, a thread layer can comprise 10 to 500 thread lines. In some embodiments, a thread layer can comprise 100 to 500 thread lines. In some embodiments, a thread layer can comprise 100 to 1000 thread lines.

In some embodiments, thread lines 904 can be bonded at anchor points 990. In such embodiments, thread lines 904 can be bonded at anchor points 990 via an adhesive, a bonding layer, thermal (conductive or convective) heat (for example, in a heat press or oven), IR (infrared) heating, laser heating, microwave heating, steam, a mechanical fastener (for example, a clip), hook and loop fasters, needle-punching, hydro-entanglement, ultrasonic/vibratory entanglement, felting, knotting, chemical bonding with a catalyst of biomaterial, adhesive spraying (for example, CNC adhesive spray deposition), or by pushing one thread line through the other thread line(s).

In some embodiments, thread lines 904 can be directly bonded together at anchor points 990. In some embodiments, thread lines 904 can be directly bonded together at anchor points 990 via a polymeric material of continuous thread 902. For example, heat and/or pressure can be applied to directly bond thread lines 904 at anchor points 990. In embodiments where heat and/or pressure is utilized to directly bond the polymeric material of thread lines 904, the thread lines 904 can be thermally fused together at one or more anchor points 990. In embodiments comprising direct bonding of thread lines 904 at anchor points 990, thread lines 904 can be directly bonded at anchor points 990 without the use of an adhesive or bonding layer.

In some embodiments, thread lines 904 can be bonded together via a bonding layer. In some embodiments, thread lines 904 can be bonded together at anchor points 990 via a bonding layer. In such embodiments, the bonding layer can be, for example, a laminated layer, an adhesive layer, a stitched layer, a cured layer, a screen-printed layer, or a blown fiber layer. In some embodiments, the blown fiber layer can comprise polymeric fibers that can bond thread lines 904.

In some embodiments, thread lines 904 can be bonded together without the use of a bonding layer. For example, in some embodiments, thread lines 904 can be directly bonded together via, for example, but not limited to, direct local bonding via material(s) of thread lines 904, needle punching, hydro-entanglement, and ultrasonic/vibratory entanglement.

In some embodiments, thread lines 904 can be bonded at points where two or more thread lines 904 overlap in thread layer 900 (i.e., intersection points 906). Thread lines 904 can be bonded at intersection points 906 via an adhesive, a bonding layer, thermal (conductive or convective) heat (for example, in a heat press or oven), IR (infrared) heating, laser heating, microwave heating, steam, a mechanical fastener (for example, a clip), hook and loop fasters, needle-punching, hydro-entanglement, ultrasonic/vibratory entanglement, felting, knotting, chemical bonding with a catalyst of biomaterial, adhesive spraying (for example, CNC adhesive spray deposition), or by pushing one thread line through the other thread line(s). Intersection points 906 for thread lines can be referred to as "overlap points" or "points of overlap."

In some embodiments, thread lines 904 can be directly bonded together at intersection points 906. In some embodiments, thread lines 904 can be directly bonded together at intersection points 906 via the polymeric material of continuous thread 902. In embodiments comprising direct bonding of thread lines 904 at intersection points 906, thread lines 904 can be bonded at intersection points 906 without the use of an adhesive or bonding layer. For example, heat and/or pressure can be applied to thread layer 900 to directly bond thread lines 904 at intersection points 906. In embodiments where heat and/or pressure is utilized to directly bond the polymeric material of thread lines 904, the thread lines 904 can be thermally fused together at one or more intersection points 906.

In some embodiments, a bonding layer can bond thread lines 904 together at a plurality of intersection points 906 within thread layer 900. In such embodiments, the bonding layer can be, for example, a laminated layer, an adhesive layer, a stitched layer, a cured layer, a screen-printed layer, or a blown fiber layer comprising polymeric fibers that can bond thread lines 904.

In some embodiments, continuous thread 902 can comprise overlaying thread lines 904. As used herein, "overlaying thread lines" means two or more thread lines that follow the same path between two respective anchor points. Overlaying thread lines need not be overlaid directly over each other. Two or more thread lines are considered overlaying as long as they extend between the same two anchor points.

The thread lines 904 of thread layer 900 may not be woven or knitted together. In such embodiments, thread lines 904 can be referred to as "non-woven" and "non-knitted" thread lines. The thread lines 904 of thread layer 900 may not be embroidered threads stitched to a base layer. In such embodiments, thread lines 904 may be referred to as "non-embroidered" thread lines.

In some embodiments, continuous thread 902 can be a polymer thread. As used herein, "polymer thread" means a thread composed at least in part of a polymeric material. In some embodiments, a polymer thread can be composed entirely of one or more polymeric materials. In some embodiments, a polymer thread can comprise a polymeric material coated around a core (which may or may not be composed of a polymeric material).

Suitable polymeric materials for polymer threads discussed herein comprise, but are not limited to, thermoplastic polyurethane (TPU), a rubber, and silicone. In some embodiments, the TPU can be recycled TPU.

In some embodiments, the polymeric material for polymer threads can comprise a melting temperature in a range of greater than or equal to 110 °C to less than or equal to 150 °C. In such embodiments, the polymeric material can be referred to as a "low melting temperature polymeric material."

In some embodiments, continuous thread 902 of thread layer 900 can have a denier in the range of from 1 denier to 3000 denier, including subranges. For example, continuous thread 902 can have a denier of 1, 10, 50, 100, 200, 300, 400, 500, 600, 700, 800, 900, 1000, 1100, 1200, 1300, 1400, 1500, 1600, 1700, 1800, 1900, 2000, 2500, or 3000 denier, or within any range having any two of these values as endpoints. For example, in some embodiments, continuous thread 902 can have a denier in the range of from 10 denier to 2500 denier, from 50 denier to 2000 denier, from 100 denier to 1900 denier, from 200 denier to 1800 denier, from 300 denier to 1700 denier, from 400 denier to 1600 denier, from 500 denier to 1500 denier, from 600 denier to 1400 denier, from 700 denier to 1300 denier, from 800 denier to 1200 denier, from 900 denier to 1100 denier, or from 900 denier to 1000 denier.

Thread patterns as described herein can comprise any number of thread layers. For example, a thread pattern can comprise two or more, three or more, four or more, five or more, six or more, seven or more, eight or more, nine or more, ten or more, fifteen or more, or twenty or more thread layers. For example, a thread pattern can comprise thread layer 900 and thread layer 920.

Continuous threads of any thread layer can be wound around and extended between anchor points 990 in the same fashion as described above for continuous thread 902. Further, thread lines of the continuous threads of any thread layer can be bonded in the same manner as described above for thread layer 900.

Like continuous thread 902, continuous thread for other thread layers can comprise a plurality of thread lines wound around and extending between two respective anchor points. In some embodiments, continuous threads of different thread layers can be the same thread material. In some embodiments, continuous threads of different thread layers can be composed of different thread materials. In such embodiments, the materials for different continuous threads in a thread pattern can be selected to provide targeted characteristics to areas of a thread pattern, and therefore an article of apparel. In some embodiments, the denier of continuous threads in different thread layers within a thread pattern can be selected to provide varying degrees of a characteristic (for example, strength or stretchability) to different areas of the thread pattern.

In embodiments comprising a thread pattern with a plurality of thread layers, the plurality of thread layers can be layered over each other. For example, thread layer 900 can define a first layer of a thread pattern and second thread layer 920 can define a second layer of the thread pattern. Different thread layers of a thread pattern can be disposed over each other in areas of overlap between the two thread layers. For example, a first thread layer 900 can be disposed over second thread layer 920, or vice versa, in areas of overlap between the two thread layers.

In embodiments comprising a thread pattern with a plurality of thread layers, the plurality of thread layers can be bonded to each other in the thread pattern. In some embodiments, one or more of the layers can be directly bonded to each other via the polymeric material of a continuous thread defining thread lines for at least one of the layers. In some embodiments, one or more of the layers can be bonded via a bonding layer. In such embodiments, the bonding layer can be, for example, a laminated layer, an adhesive layer, a stitched layer, a cured layer, a screen-printed layer, or a blown fiber layer.

In some embodiments, one or more thread layers of a thread pattern can serve to bond other thread layers of the thread pattern together. In such embodiments, these one or more thread layers can be wound using a polymeric thread, which when heated, bonds other layers of the thread pattern together at anchor points and/or intersection points between continuous threads. For example, in a thread pattern comprising three thread layers, one of the three thread layers (for example, the middle thread layer) can be a wound using a polymeric thread that serves to bond all three thread layers together. In some embodiments, one or more thread layers of a thread pattern can be defined by a wound continuous thread coated or impregnated with an adhesive. In some embodiments, the adhesive can be activated with the application of heat. In some embodiments, the adhesive can be a dissolvable adhesive that, when contacted with a solvent, such as water, fully or partially dissolves to bond thread layers together.

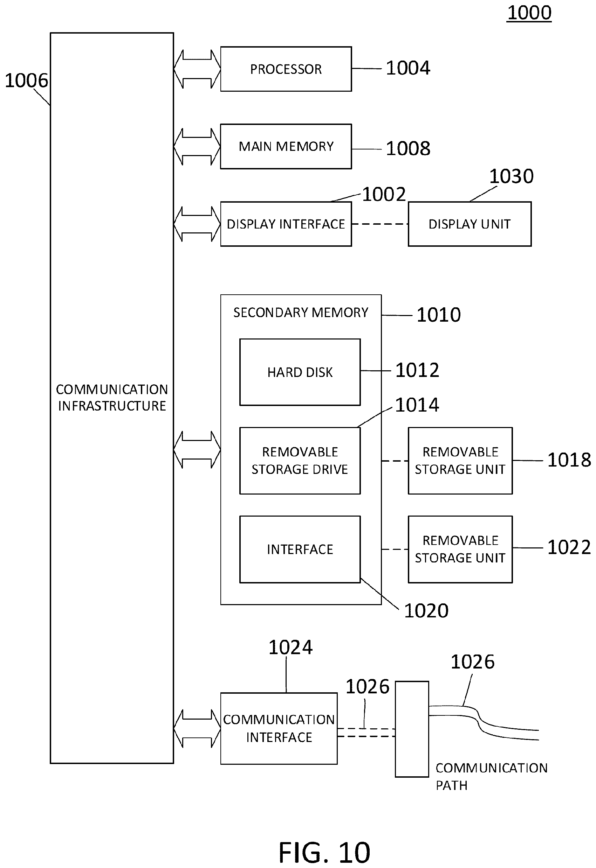

FIG. 10 illustrates an exemplary computer system 1000 in which embodiments, or portions thereof, may be implemented as computer-readable code. System 100 described can comprise computer system 1000 such that computer system 1000 acts as a controller for system 100. For example, aspects of the methods discussed herein may be implemented in computer system 1000 using hardware, software, firmware, tangible computer readable media having instructions stored thereon, or a combination thereof and may be implemented in one or more computer systems or other processing systems.

If programmable logic is used, such logic may execute on a commercially available processing platform or a special purpose device. One of ordinary skill in the art may appreciate that embodiments of the disclosed subject matter can be practiced with various computer system configurations, including multi-core multiprocessor systems, minicomputers, and mainframe computers, computer linked or clustered with distributed functions, as well as pervasive or miniature computers that may be embedded into virtually any device.

For instance, at least one processor device and a memory may be used to implement the above-described embodiments. A processor device may be a single processor, a plurality of processors, or combinations thereof. Processor devices may have one or more processor "cores."

Various embodiments described herein may be implemented in terms of this example computer system 1000. After reading this description, it will become apparent to a person skilled in the relevant art how to implement one or more of the embodiments using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

Processor device 1004 may be a special purpose or a general-purpose processor device. As will be appreciated by persons skilled in the relevant art, processor device 1004 may also be a single processor in a multi-core/multiprocessor system, such system operating alone, or in a cluster of computing devices operating in a cluster or server farm. Processor device 1004 is connected to a communication infrastructure 1006, for example, a bus, message queue, network, or multi-core message-passing scheme.

Computer system 1000 also comprises a main memory 1008, for example, random access memory (RAM), and may also comprise a secondary memory 1010. Secondary memory 1010 may comprise, for example, a hard disk drive 1012, or removable storage drive 1014. Removable storage drive 1014 may comprise a floppy disk drive, a magnetic tape drive, an optical disk drive, a flash memory, a Universal Serial Bus (USB) drive, or the like. The removable storage drive 1014 reads from and/or writes to a removable storage unit 1018 in a well-known manner. Removable storage unit 1018 may comprise a floppy disk, magnetic tape, optical disk, etc. which is read by and written to by removable storage drive 1014. As will be appreciated by persons skilled in the relevant art, removable storage unit 1018 comprises a computer usable storage medium having stored therein computer software and/or data.

Computer system 1000 (optionally) comprises a display interface 1002 (which can comprise input and output devices such as keyboards, mice, etc.) that forwards graphics, text, and other data from communication infrastructure 1006 (or from a frame buffer not shown) for display on display unit 1030.

In additional and/or alternative implementations, secondary memory 1010 may comprise other similar means for allowing computer programs or other instructions to be loaded into computer system 1000. Such means may comprise, for example, a removable storage unit 1022 and an interface 1020. Examples of such means may comprise a program cartridge and cartridge interface (such as that found in video game devices), a removable memory chip (such as an EPROM, or PROM) and associated socket, and other removable storage units 1022 and interfaces 1020 which allow software and data to be transferred from the removable storage unit 1022 to computer system 1000.

Computer system 1000 may also comprise a communication interface 1024. Communication interface 1024 allows software and data to be transferred between computer system 1000 and external devices. Communication interface 1024 may comprise a modem, a network interface (such as an Ethernet card), a communication port, a PCMCIA slot and card, or the like. Software and data transferred via communication interface 1024 may be in the form of signals, which may be electronic, electromagnetic, optical, or other signals capable of being received by communication interface 1024. These signals may be provided to communication interface 1024 via a communication path 1026. Communication path 1026 carries signals and may be implemented using wire or cable, fiber optics, a phone line, a cellular phone link, an RF link or other communication channels.

In this document, the terms "computer program medium" and "computer usable medium" are used to generally refer to media such as removable storage unit 1018, removable storage unit 1022, and a hard disk installed in hard disk drive 1012. Computer program medium and computer usable medium may also refer to memories, such as main memory 1008 and secondary memory 1010, which may be memory semiconductors (for example, DRAMs, etc.).

Computer programs (also called computer control logic) are stored in main memory 1008 and/or secondary memory 1010. Computer programs may also be received via communication interface 1024. Such computer programs, when executed, enable computer system 1000 to implement the embodiments as discussed herein. In particular, the computer programs, when executed, enable processor device 1004 to implement the processes of the embodiments discussed here. Accordingly, such computer programs represent controllers of the computer system 1000. Where the embodiments are implemented using software, the software may be stored in a computer program product and loaded into computer system 1000 using removable storage drive 1014, interface 1020, and hard disk drive 1012, or communication interface 1024.

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The foregoing description of the specific embodiments will so fully reveal the general nature of the invention(s) that others can, by applying knowledge within the skill of the art, readily modify and/or adapt for various applications such specific embodiments, without undue experimentation, without departing from the general concept of the present invention(s). Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention(s) should not be limited by any of the above-described exemplary embodiments, but should be defined only in accordance with the following claims and their equivalents.

Further embodiments:
1. A method of manufacturing an article of apparel, the method comprising:
   forming a thread layer by winding a continuous thread around a plurality of projections disposed on a support plate, wherein the support plate comprises a winding field around which the projections are arranged and away from which the projections are tilted, and wherein the thread layer comprises a plurality of thread lines, with each thread line extending between two respective projections and across the winding field;
   moving at least some of the projections relative to the field; and
   removing the thread layer from the support plate after moving the at least some of the projections relative to the field.
2. The method of embodiment 1, comprising bonding the thread lines to each other before removing the thread layer from the support plate.
3. The method of embodiment 1 or 2, comprising bonding the thread lines to each other before moving the at least some of the projections relative to the field.
4. The method of any one of the preceding embodiments, wherein the projections are pivotably connected to the support plate, and wherein moving the at least some of the projections relative to the field comprises pivoting the projections toward the field.
5. The method of embodiment 4, wherein the support plate comprises hinges that pivotably connect the projections to a base of the support plate.
6. The method of embodiment 4 or 5, wherein each projection is pivotable relative to a base of the support plate.
7. The method of embodiment 4, 5 or 6, wherein the thread layer is removed from the support plate in a direction of a removal axis, and when the projections are tilted away from the winding field, the projections each extend further away from the removal axis with increasing distance from a base of the support plate.
8. The method of embodiment 7, wherein a respective tilt angle of each projection is defined between the projection and the removal axis when the projections are tilted away from the field, and pivoting the projections toward the field comprises reducing the tilt angle.
9. The method of any one of the embodiments 4 to 8, comprising removing the thread layer from one of the projections after pivoting the one of the projections toward the field.
10. The method of any one of the preceding embodiments, comprising removing the thread layer from at least a first one of the projections before moving at least a second one of the projections.
11. The method of any one of the preceding embodiment, wherein the article of apparel comprises an upper for an article footwear.
12. The method of any one of the preceding embodiments, wherein the support plate comprises one or more sliding mechanisms that movably couple the projections to a base of the support plate.
13. The method of embodiment 12, comprising:
   forming the thread layer while the sliding mechanism is in a first position;
   bonding the continuous thread within the thread layer while the sliding mechanism remains in the first position;
   changing tension on the continuous thread after bonding the continuous thread by moving the sliding mechanism to a second position; and
   winding a second thread layer around the plurality of projections while the sliding mechanism remains in the second position.
14. A support plate for manufacturing an upper for an article of footwear, the support plate comprising:
   projections movably connected to the support plate, wherein the projections are arranged to define a perimeter of a field in the shape of a flat upper for an article of footwear.
15. The support plane of embodiment 14, wherein each projection comprises a pin.
16. The support plane of embodiment 14 or 15, comprising hinges that pivotably couple one or more respective projections to a base of the support plate.
17. The support plane of any one of the preceding embodiments 14 to 16, comprising sliders that movably couple one or more respective projections to a base of the support plate.
18. The support plane of any one of the preceding embodiments 14 to 17, wherein the winding field comprises two wings joined by a bridge.
19. A system for manufacturing an article of apparel, the system comprising:
   a support plate comprising projections movably connected to the support plate, wherein the projections are arranged to define a perimeter of a winding field on the support plate; and
   a winding machine configured to wind a continuous thread around a plurality of the projections to form a thread layer comprising a plurality of thread lines, with each thread line extending between two respective projections and across the winding field.
20. The system of embodiment 19, comprising an actuator configured to move the projections on the support plate relative to the winding field.

## Claims

1. A method of manufacturing an article of apparel, the method comprising:
forming a thread layer (120, 220, 720, 820, 900, 920) by winding a continuous thread (902, 922) around a plurality of projections (104, 204, 304, 404, 504, 604, 704, 804) disposed on a support plate (101, 201, 301, 401, 501, 601, 701, 801), wherein the support plate (101, 201,301,401,501, 601, 701, 801) comprises a winding field (108, 208, 308, 408, 508, 608, 708, 808) around which the projections (104, 204, 304, 404, 504, 604, 704, 804) are arranged and away from which the projections (104, 204, 304, 404, 504, 604, 704, 804) are tilted, and wherein the thread layer (120, 220, 720, 820, 900, 920) comprises a plurality of thread lines (122, 904, 924), with each thread line (122, 904, 924) extending between two respective projections (104, 204, 304, 404, 504, 604, 704, 804) and across the winding field (108, 208, 308, 408, 508, 608, 708, 808);
moving at least some of the projections (104, 204, 304, 404, 504, 604, 704, 804) relative to the field; and
removing the thread layer (120, 220, 720, 820, 900, 920) from the support plate (101, 201, 301,401,501, 601, 701, 801) after moving the at least some of the projections (104, 204, 304, 404, 504, 604, 704, 804) relative to the field.

2. The method of claim 1, comprising bonding the thread lines (122, 904, 924) to each other before removing the thread layer (120, 220, 720, 820, 900, 920) from the support plate (101, 201,301, 401,501, 601, 701, 801).

3. The method of claims 1 or 2, comprising bonding the thread lines (122, 904, 924) to each other before moving the at least some of the projections (104, 204, 304, 404,504, 604, 704, 804) relative to the field.

4. The method of any one of the preceding claims, wherein the projections (104, 204, 304, 404, 504, 604, 704, 804) are pivotably connected to the support plate (101, 201, 301, 401, 501, 601, 701, 801), and wherein moving the at least some of the projections (104, 204, 304, 404, 504, 604, 704, 804) relative to the field comprises pivoting the projections (104, 204, 304, 404, 504, 604, 704, 804) toward the field.

5. The method of claim 4, wherein the support plate (101, 201, 301, 401, 501, 601, 701, 801) comprises hinges that pivotably connect the projections (104, 204,304,404, 504, 604, 704, 804) to a base (103, 203, 209, 303, 403, 503, 603, 703, 803) of the support plate (101, 201, 301, 401, 501, 601, 701, 801).

6. The method of claim 4 or 5, wherein each projection (104, 204, 304, 404, 504, 604, 704, 804) is pivotable relative to a base (103, 203, 209, 303, 403, 503, 603, 703, 803) of the support plate (101, 201, 301, 401, 501, 601, 701, 801).

7. The method of any one of claims 4 to 6, wherein the thread layer (120, 220, 720, 820, 900, 920) is removed from the support plate (101, 201, 301, 401, 501, 601, 701, 801) in a direction of a removal axis (230), and when the projections (104, 204, 304, 404, 504, 604, 704, 804) are tilted away from the winding field (108, 208, 308, 408, 508, 608, 708, 808), the projections (104, 204, 304, 404, 504, 604, 704, 804) each extend further away from the removal axis (230) with increasing distance from a base (103, 203, 209, 303, 403, 503, 603, 703, 803) of the support plate (101, 201, 301, 401, 501, 601, 701, 801).

8. The method of claim 7, wherein a respective tilt angle (236) of each projection (104, 204,304, 404,504, 604, 704, 804) is defined between the projection (104, 204, 304, 404, 504, 604, 704, 804) and the removal axis (230) when the projections (104, 204, 304, 404, 504, 604, 704, 804) are tilted away from the field, and pivoting the projections (104, 204, 304, 404, 504, 604, 704, 804) toward the field comprises reducing the tilt angle (236).

9. The method of any one of claims 4 to 8, comprising removing the thread layer (120, 220, 720, 820, 900, 920) from one of the projections (104, 204, 304, 404, 504, 604, 704, 804) after pivoting the one of the projections (104, 204, 304, 404, 504, 604, 704, 804) toward the field.

10. The method of any one of claims 1 to 9, comprising removing the thread layer (120, 220, 720, 820, 900, 920) from at least a first one of the projections (104, 204, 304, 404,504, 604, 704, 804) before moving at least a second one of the projections (104, 204, 304, 404,504, 604, 704, 804).

11. The method of any one of claims 1 to 10, wherein the support plate (101, 201, 301, 401, 501, 601, 701, 801) comprises one or more sliding mechanisms that movably couple the projections (104, 204, 304, 404, 504, 604, 704, 804) to a base (103, 203, 209, 303, 403, 503, 603, 703, 803) of the support plate (101, 201, 301, 401, 501, 601, 701, 801).

12. The method of claim 11, comprising:
forming the thread layer (120, 220, 720, 820, 900, 920) while the sliding mechanism is in a first position;
bonding the continuous thread (902, 922) within the thread layer (120, 220, 720, 820, 900, 920) while the sliding mechanism remains in the first position;
changing tension on the continuous thread (902, 922) after bonding the continuous thread (902, 922) by moving the sliding mechanism to a second position; and
winding a second thread layer (920) around the plurality of projections (104, 204, 304, 404, 504, 604, 704, 804) while the sliding mechanism remains in the second position.

13. A support plate (101, 201, 301, 401, 501, 601, 701, 801) for manufacturing an upper for an article of footwear, the support plate (101, 201, 301, 401, 501, 601, 701, 801) comprising:
projections (104, 204, 304, 404, 504, 604, 704, 804) movably connected to the support plate (101, 201, 301, 401, 501, 601, 701, 801), wherein the projections (104, 204, 304, 404,504, 604, 704, 804) are arranged to define a perimeter of a field in the shape of a flat upper for an article of footwear;
wherein, optionally, each projection (104, 204, 304, 404, 504, 604, 704, 804) comprises a pin (656);
wherein the support plane optionally comprises hinges that pivotably couple one or more respective projections (104, 204, 304, 404, 504, 604, 704, 804) to a base (103, 203, 209, 303, 403, 503, 603, 703, 803) of the support plate (101, 201, 301, 401, 501, 601, 701, 801);
wherein the support plane optionally comprises sliders that movably couple one or more respective projections (104, 204, 304, 404, 504, 604, 704, 804) to a base (103, 203, 209, 303, 403, 503, 603, 703, 803) of the support plate (101, 201, 301, 401, 501, 601, 701, 801);
wherein the winding field (108, 208, 308, 408, 508, 608, 708, 808) optionally comprises two wings joined by a bridge (868).

14. A system (100, 1000) for manufacturing an article of apparel, the system (100, 1000) comprising:
a support plate (101, 201, 301, 401, 501, 601, 701, 801) comprising projections (104, 204, 304, 404, 504, 604, 704, 804) movably connected to the support plate (101, 201, 301, 401, 501, 601, 701, 801), wherein the projections (104, 204, 304, 404, 504, 604, 704, 804) are arranged to define a perimeter of a winding field (108, 208, 308, 408, 508, 608, 708, 808) on the support plate (101, 201, 301, 401, 501, 601, 701, 801); and
a winding machine (102) configured to wind a continuous thread (902, 922) around a plurality of the projections (104, 204, 304, 404, 504, 604, 704, 804) to form a thread layer (120, 220, 720, 820, 900, 920) comprising a plurality of thread lines (122, 904, 924), with each thread line (122, 904, 924) extending between two respective projections (104, 204, 304, 404, 504, 604, 704, 804) and across the winding field (108, 208, 308, 408, 508, 608, 708, 808).

15. The system (100, 1000) of claim 14, comprising an actuator (444, 548) configured to move the projections (104, 204, 304, 404, 504, 604, 704, 804) on the support plate (101, 201, 301, 401, 501, 601, 701, 801) relative to the winding field (108, 208, 308, 408, 508, 608, 708, 808).
